# EUROPÄISCHE PATENTSCHRIFT

(11) **EP 4 260 082 B1**
(45) Veröffentlichungstag und Bekanntmachung des Hinweises auf die Patenterteilung: **17.12.2025**
(21) Anmeldenummer: 21794525.2
(22) Anmeldetag: 15.10.2021
(51) Int. Cl.: G01S 7/40, G01S 7/497, G01S 13/58, G01S 13/60, G01S 17/58, G01S 13/931, G01S 17/931

(54) **VERFAHREN ZUR VALIDIERUNG VON UMGEBUNGSERFASSUNGSSENSOREN EINES FAHRZEUGS UND ZUR VALIDIERUNG VON UMGEBUNGSERFASSUNGSSENSOREN EINGERICHTETES FAHRZEUG**
METHOD FOR VALIDATING SURROUNDINGS DETECTION SENSORS OF A VEHICLE, AND VEHICLE DESIGNED TO VALIDATE SURROUNDINGS DETECTION SENSORS
PROCÉDÉ DE VALIDATION DE CAPTEURS DE DÉTECTION DE VOISINAGE D'UN VÉHICULE, ET VÉHICULE CONÇU POUR VALIDER DES CAPTEURS DE DÉTECTION DE VOISINAGE

(30) Priorität: 11.12.2020 DE 102020007599
(43) Veröffentlichungstag der Anmeldung: 18.10.2023
(73) Patentinhaber: Daimler Truck AG, 70771 Leinfelden-Echterdingen (DE)
(72) Erfinder: KLEINSCHMIDT, Sebastian, 73728 Esslingen (DE)
(74) Vertreter: JENSEN & SON
(86) Internationale Anmeldenummer: PCT/EP2021/078572
(87) Internationale Veröffentlichungsnummer: WO 2022/122228

(56) Entgegenhaltungen:
- EP-A1- 3 001 137
- WO-A1-2020/048649
- DE-A1- 19 962 997
- JIARONG LIN ET AL: "A decentralized framework for simultaneous calibration, localization and mapping with multiple LiDARs", ARXIV.ORG, CORNELL UNIVERSITY LIBRARY, 201 OLIN LIBRARY CORNELL UNIVERSITY ITHACA, NY 14853, 3 July 2020 (2020-07-03), XP081714091
- KELLNER DOMINIK ET AL: "Instantaneous ego-motion estimation using multiple Doppler radars", 2014 IEEE INTERNATIONAL CONFERENCE ON ROBOTICS AND AUTOMATION (ICRA), IEEE, 31 May 2014 (2014-05-31), pages 1592 - 1597, XP032650584, DOI: 10.1109/ICRA.2014.6907064

## Beschreibung

Die Erfindung betrifft ein Verfahren zur Validierung einer extrinsischen Kalibrierung einer Mehrzahl von starr mit einem Fahrzeug verbundenen Umgebungserfassungssensoren, welche zur Erfassung einer auf jeweils ein Sensorkoordinatensystem bezogenen Relativgeschwindigkeit eingerichtet sind. Die Erfindung betrifft ferner ein Fahrzeug mit solchen Umgebungssensoren und mit mindestens einem Steuergerät.

Aus der DE 10 2005 037 094 B3 ist ein Verfahren zum Kalibrieren eines Sensors zur Abstandsmessung mit zwei Sensorkanälen, dessen Abstrahlung keulenförmig ist, bekannt. Das Verfahren umfasst die folgenden Schritte:
- Aussenden einer Strahlungskeule eines Sensorkanals auf eine Kalibrierfläche mittels des Sensors,
- Erfassen der Strahlungskeule mit einer Kamera eines Videosystems,
- Ermitteln eines ersten Repräsentanzwerts der Strahlungskeule in Bildkoordinaten der Kamera,
- Verändern einer Lage der Kalibrierfläche in Bezug auf den Sensor und die Kamera,
- Erfassen der Strahlungskeule mit der Kamera,
- Ermitteln eines zweiten Repräsentanzwerts der Strahlungskeule in Bildkoordinaten der Kamera,
- Wiederholen der vorherigen Schritte für einen weiteren Sensorkanal,
- Modellieren von Keulenachsen der ausgesendeten Strahlungskeulen als Geraden in Sensorkoordinaten,
- Transformieren der modellierten Geraden aus Sensorkoordinaten in Bildkoordinaten der Kamera,
- Vergleichen der Geraden mit den ermittelten Repräsentanzwerten in Bildkoordinaten für jeden Sensorkanal,
- Ermitteln einer Kalibrierfunktion zur Kompensation einer möglichen Abweichung der modellierten Geraden von wenigstens mehreren Repräsentanzwerten.

JIARONG LIN ET AL: "A decentralized framework for simultaneous calibration, localization and mapping with multiple LiDARs", ARXIV.ORG, CORNELL UNIVERSITY LIBRARY, 201 0LIN LIBRARY CORNELL UNIVERSITY ITHACA, NY 14853, 3. Juli 2020 (2020-07-03) XP081714091 beschreibt ein dezentralisiertes Framework für die simultane Kalibrierung, Lokalisierung und Mapping mit mehreren LiDAR-Systemen.

DE 199 62 997 A1 beschreibt ein Verfahren zur Kalibrierung eines Sensorsystems, mit dem eine Erfassung und Auswertung von Objekten im Kursverlauf eines Fahrzeuges durchgeführt wird, bei dem
- mit dem Sensorsystem charakteristische Daten der Objekte erfasst werden und die Daten, die unter Berücksichtigung der Eigenbewegung des Fahrzeugs als ruhende oder quasi ruhende Objekte erkannt werden, einer Kalibrierungseinheit zugeführt werden, wobei
- die Abweichung der aktuell gemessenen Daten von Daten eines Modells der Objekte als Fehlervektor ermittelt und zur Korrektur der Daten des Modells in Richtung auf eine Minimierung der Abweichung herangezogen wird;
- nach einer Initialisierungsphase mit vorgebbaren Parametern eine erste Erfassung der Objektdaten vorgenommen wird, die als Modelldaten gespeichert werden;
- in allen zyklisch darauf folgenden Messungen die jeweils aktuellen Objektdaten mit den zuvor erfassten gespeicherten Modelldaten zur Gewinnung des jeweiligen Fehlervektors in der Kalibrierungseinheit verarbeitet werden;
- während der Verarbeitung der Daten in der Kalibrierungseinheit die jeweils in den vorherigen Messungen gewonnenen Objektdaten ausgewählt werden, wobei nicht wieder gefundene Objektdaten gelöscht und jeweils neu hinzugekommene Objektdaten aufgenommen werden; und
- die Objektdaten, die nach mehrmaligen Messungen aus unterschiedlichen Positionen des Fahrzeugs heraus eine Verkleinerung des jeweiligen Konfidenzintervalls aufweisen, als zu einem ruhenden oder quasi ruhenden Objekt gehörende Daten gekennzeichnet werden.

EP 3 001 137 A1 beschreibt ein Verfahren zur Überwachung einer Kalibrierung mehrerer, Sensordaten aus der Umgebung eines Kraftfahrzeugs aufnehmender, an einer durch extrinsische Kalibrierungsparameter beschriebenen Verbauposition im Kraftfahrzeug verbauter Umgebungssensoren bezüglich der extrinsischen Kalibrierungsparameter, wobei zur Ermittlung einer Dekalibrierung wenigstens eines Umgebungssensors dasselbe Merkmal der Umgebung in derselben Eigenschaft beschreibende Sensordaten unterschiedlicher Umgebungssensoren durch wenigstens ein die Sensordaten vergleichendes Dekalibrierungskriterium ausgewertet werden.

WO 2020/048649 A1 beschreibt ein Verfahren zur Erkennung von Winkelmessfehlern bei einem winkelauflösenden Radarsensor für Kraftfahrzeuge, bei dem für stationäre Radarziele jeweils die Radialgeschwindigkeit und mindestens ein Ortungswinkel gemessen wird und anhand des gemessenen Ortungswinkels ein erwarteter Wert für die Radialgeschwindigkeit berechnet und mit dem gemessenen Wert verglichen wird, wobei Messungen der Radialgeschwindigkeiten und der Ortungswinkel für ein oder mehrere stationäre Ziele vorgenommen werden, für jedes dieser Ziele ein Einzel-Indikatorwert berechnet wird, der die Abweichung der gemessenen von der erwarteten Radialgeschwindigkeit angibt, die erhaltenen Einzel-Indikatorwerte einer winkelabhängigen Skalierung zum Ausgleich der Winkelabhängigkeit distortiver Winkelfehler unterzogen werden, und aus den skalierten Einzel-Indikatorwerten ein Indikator für den Winkelmessfehler berechnet wird.

KELLNER DOMINIK ET AL: "Instantaneous ego-motion estimation using multiple Doppler radars", 2014 IEEE INTERNATIONAL CONFERENCE ON ROBOTICS AND AUTOMATION (ICRA), IEEE, 31. Mai 2014 (2014-05-31), Seiten 1592-1597, XP032650584, DOI: 10.1109/ICRA.2014.6907064 beschreibt einen Algorithmus, der unter Verwendung von Radarsensoren einen kompletten 2D-Bewegungszustand eines Ego-Fahrzeugs instantan ermittelt.

Der Erfindung liegt die Aufgabe zu Grunde, ein neuartiges Verfahren zur Validierung von Umgebungserfassungssensoren eines Fahrzeugs anzugeben. Der Erfindung liegt ferner die Aufgabe zu Grunde, ein Fahrzeug anzugeben, das zur Validierung solcher Umgebungserfassungssensoren eingerichtet ist.

Die Aufgabe wird hinsichtlich des Verfahrens erfindungsgemäß gelöst durch ein Verfahren, welches die im Anspruch 1 angegebenen Merkmale aufweist.

Die Aufgabe wird hinsichtlich des Fahrzeugs erfindungsgemäß gelöst durch ein Fahrzeug, welches die im Anspruch 4 angegebenen Merkmale aufweist.

Vorteilhafte Ausgestaltungen der Erfindung sind Gegenstand der Unteransprüche.

Bei einem Verfahren zur Validierung einer Mehrzahl von starr mit einem Fahrzeug verbundenen Umgebungserfassungssensoren, welche zur Erfassung einer auf jeweils ein zugeordnetes Sensorkoordinatensystem bezogenen Relativgeschwindigkeit mindestens eines Objekts in der Umgebung des Fahrzeugs eingerichtet sind, wird erfindungsgemäß in einer extrinsischen Kalibrierung für jedes Sensorkoordinatensystem eine homogene Koordinatentransformation zur Überführung von Koordinaten des Sensorkoordinatensystems in Koordinaten eines starr mit dem Fahrzeug verbundenen Fahrzeugkoordinatensystems bestimmt. Die Relativgeschwindigkeit gibt nach Betrag und Richtung die Bewegungsgeschwindigkeit eines Objektes in der Umgebung des Fahrzeugs relativ zu dem jeweiligen Sensorkoordinatensystem an.

Anhand der dem jeweiligen Sensorkoordinatensystem zugeordneten homogenen Koordinatentransformation wird zu jeder von einem Umgebungserfassungssensor erfassten Relativgeschwindigkeit eine auf das Fahrzeugkoordinatensystem bezogene Objektgeschwindigkeit bestimmt. Die Objektgeschwindigkeit gibt nach Betrag und Richtung die Bewegungsgeschwindigkeit eines Objektes in der Umgebung des Fahrzeugs relativ zu dem Fahrzeugkoordinatensystem an.

Zusätzlich wird aus der Mehrzahl der Relativgeschwindigkeiten mindestens ein Parameter eines Bewegungsmodells des Fahrzeugs bestimmt. Ein Bewegungsmodell eines Fahrzeugs kann beispielsweise als momentane (instantane) Fahrzeuggeschwindigkeit nach Betrag und Richtung angegeben werden. Es sind aber auch Bewegungsmodelle möglich, bei denen andere oder zusätzliche Parameter, beispielsweise mindestens eine Winkelgeschwindigkeit oder ein Krümmungsradius einer von dem Fahrzeug gefahrenen Trajektorie erfasst werden.

Aus der Mehrzahl von Umgebungserfassungssensoren wird ein dekalibrierter Zustand dann zugeordnet, wenn die bezogen auf das Fahrzeugkoordinatensystem bestimmten Objektgeschwindigkeiten untereinander um mehr als ein vorbestimmtes Maß abweichen.

Unter einem dekalibrierten Zustand ist hierbei und im Folgenden eine Veränderung der Pose (das heißt: der Lage und/oder Ausrichtung) mindestens eines Sensorkoordinatensystems relativ zu mindestens einem anderen Sensorkoordinatensystem gegenüber der in der extrinsischen Kalibrierung erfassten Pose zu verstehen, wobei diese Veränderung der Pose bewirkt, dass die Fahrzeuggeschwindigkeit aus den Relativgeschwindigkeiten nicht mehr valide ermittelt werden kann.

Alternativ oder zusätzlich wird ein dekalibrierter Zustand dann zugeordnet, wenn die Objektgeschwindigkeiten um mehr als ein vorbestimmtes Maß von den Geschwindigkeiten abweichen, welche die Objekte in der Fahrzeugumgebung unter Zugrundelegung eines mit mindestens einem Parameter aus den Relativgeschwindigkeiten bestimmten Bewegungsmodells des Fahrzeugs haben.

Ein Vorteil des Verfahrens besteht darin, dass eine extrinsische Kalibrierung validiert werden kann, wenn von verschiedenen Umgebungserfassungssensoren Relativgeschwindigkeiten verschiedener Objekte erfasst werden. Insbesondere ist eine Validierung der extrinsischen Kalibrierung auch möglich, wenn sich die Bereiche der Fahrzeugumgebung, die von verschiedenen Umgebungserfassungssensoren überstrichen werden, nicht überlappen. Ferner ist eine Validierung möglich, ohne dass Objekte identifiziert, das heißt: als von verschiedenen Umgebungserfassungssensoren übereinstimmend erfasst erkannt werden.

Eine Validierung nach dem erfindungsgemäßen Verfahren ist zudem ohne Zugriff auf eine digitale Karte möglich, in der Objekte verzeichnet sind, welche potentiell von einem Umgebungserfassungssensor erfasst werden können. Dadurch ist es möglich, eine Validierung fortlaufend und in im Prinzip beliebigen, insbesondere auch nicht kartierten Umgebungen vorzunehmen.

Das erfindungsgemäße Verfahren ermöglicht somit eine zuverlässigere und einfachere Validierung einer Mehrzahl von Umgebungserfassungssensoren als aus dem Stand der Technik bekannte Verfahren.

Erfindungsgemäß werden Abweichungen zwischen Objektgeschwindigkeiten, die verschiedenen Sensorkoordinatensystemen zugeordnet sind, paarweise als Vektordifferenz ermittelt. Die nach Betrag und Richtung maximale paarweise Vektordifferenz wird mit einer vorbestimmten Betragsdifferenz (hinsichtlich des Betrags der paarweisen Vektordifferenz) beziehungsweise mit einer vorbestimmten Winkeldifferenz (hinsichtlich der Richtung der paarweisen Vektordifferenz) verglichen. Ein dekalibrierter Zustand wird der Mehrzahl von Umgebungserfassungssensoren dann zugeordnet, wenn mindestens eine paarweise Vektordifferenz das vorbestimmte Maß hinsichtlich der Betragsdifferenz und/oder der Winkeldifferenz überschreitet.

Ein Vorteil dieser Ausführungsform besteht darin, dass ein dekalibrierter Zustand besonders leicht ermittelt werden kann.

Bei einer Ausführungsform des Verfahrens wird das Bewegungsmodell des Fahrzeugs als eine auf das Fahrzeugkoordinatensystem bezogene Fahrzeuggeschwindigkeit nach Betrag und Richtung bestimmt. Aus der Fahrzeuggeschwindigkeit wird entsprechend der jeweils zugeordneten homogenen Koordinatentransformation für jedes Sensorkoordinatensystem eine Soll-Relativgeschwindigkeit ermittelt. Mindestens eine Soll-Relativgeschwindigkeit wird mit der für das jeweilige Sensorkoordinatensystem erfassten Relativgeschwindigkeit nach Betrag und/oder Richtung verglichen.

Ein Vorteil dieser Ausführungsform besteht darin, dass ein dekalibrierter Zustand besonders zuverlässig ermittelt werden kann. Insbesondere können nach Betrag und Richtung sehr ähnliche Abweichungen mehrerer Sensorkoordinatensysteme zuverlässig erkannt werden.

Bei einer Ausführungsform wird eine Vertrauenswürdigkeit der Zuordnung des dekalibrierten Zustands statistisch aus der Mehrzahl der Relativgeschwindigkeiten ermittelt. Beispielsweise kann eine Vertrauenswürdigkeit aus dem relativen Anteil der Sensorkoordinatensysteme ermittelt werden, deren zugeordnete Objektgeschwindigkeiten nicht oder nur geringfügig, das heißt: um weniger als das vorbestimmte Maß voneinander abweichen.

Alternativ oder zusätzlich kann ein kalibrierter Zustand dann zugeordnet werden, wenn die Objektgeschwindigkeiten untereinander und bezogen auf das Bewegungsmodell des Fahrzeugs ausschließlich nicht oder nur geringfügig, das heißt: um weniger als das vorbestimmte Maß abweichen.

Unter einem kalibrierten Zustand ist hierbei und im Folgenden zu verstehen, dass die Posen aller Sensorkoordinatensysteme gegenüber der jeweils in der extrinsischen Kalibrierung erfassten Pose nicht oder nur so weit abweichen, dass die Fahrzeuggeschwindigkeit aus den Relativgeschwindigkeiten noch valide ermittelt werden kann.

In gleicher Weise wie für die Vertrauenswürdigkeit der Zuordnung des dekalibrierten Zustands bereits erklärt, wird auch die Vertrauenswürdigkeit der Zuordnung des kalibrierten Zustands statistisch ermittelt.

Ein Vorteil dieser Ausführungsform des Verfahrens besteht darin, dass bei unzuverlässigen Messungen einzelner Umgebungserfassungssensoren, beispielsweise bei Erfassung eines vorausfahrenden Fahrzeugs durch mindestens einen Umgebungserfassungssensor und gleichzeitige Erfassung eines unbewegten Objekts durch mindestens einen weiteren Umgebungserfassungssensor, fehlerhafte Zustandszuordnungen erkennbar sind. Dadurch wird eine robustere und fehlertolerantere Validierung ermöglicht.

Bei einem Fahrzeug umfassend mindestens eine Recheneinheit und eine Mehrzahl von Umgebungserfassungssensoren, welche zur Erfassung einer auf ein Sensorkoordinatensystem des jeweiligen Umgebungserfassungssensor bezogenen Relativgeschwindigkeit mindestens eines in der Umgebung des Fahrzeugs erfassten Objektes eingerichtet sind, sind erfindungsgemäß die Umgebungserfassungssensoren und die mindestens eine Recheneinheit zur Ausführung des beschriebenen Verfahrens zur Validierung der Mehrzahl der Umgebungserfassungssensoren eingerichtet.

Ein solches Fahrzeug weist den Vorteil auf, dass eine Dekalibrierung der Umgebungserfassungssensoren besonders leicht und zuverlässig erkannt wird und Fehler in Fahrzeugfunktionen, die auf einer Auswertung von Messdaten dieser Umgebungserfassungssensoren beruhen, beispielsweise fehlerhafte oder ausbleibende Warnungen des Fahrzeugführers oder eine falsche Steuerung des Fahrzeugs, erkannt oder vermieden werden können. Dadurch wird ein zuverlässigeres und sichereres Fahrzeug ermöglicht.

In einer besonders platz- und kostensparenden Ausführungsform ist die mindestens eine Recheneinheit als Steuergerät ausgebildet.

Ausführungsbeispiele der Erfindung werden im Folgenden anhand von Zeichnungen näher erläutert.

Dabei zeigen:
- Fig. 1: schematisch ein Fahrzeug mit Sensoren zur Geschwindigkeitsmessung in einer Anordnung zur extrinsischen Kalibrierung,
- Fig. 2: schematisch Relativgeschwindigkeiten und Objektgeschwindigkeiten bei gegenüber der extrinsischen Kalibrierung unveränderter Sensorpose,
- Fig. 3: schematisch ein Fahrzeug mit Sensoren in gegenüber der extrinsischen Kalibrierung veränderter Sensorpose,
- Fig. 4: schematisch Relativgeschwindigkeiten und Objektgeschwindigkeiten bei gegenüber der extrinsischen Kalibrierung veränderter Sensorpose,
- Fig. 5: schematisch den Ablaufplan eines Verfahrens zur Unterscheidung zwischen einem kalibrierten und einem dekalibrierten Zustand,
- Fig. 6: schematisch ein Fahrzeug mit Sensoren in gegenüber der extrinsischen Kalibrierung unveränderter Sensorpose in Kurvenfahrt sowie
- Fig. 7: schematisch ein Fahrzeug mit Sensoren in gegenüber der extrinsischen Kalibrierung unveränderter Sensorpose in Kurvenfahrt.

Einander entsprechende Teile sind in allen Figuren mit den gleichen Bezugszeichen versehen.

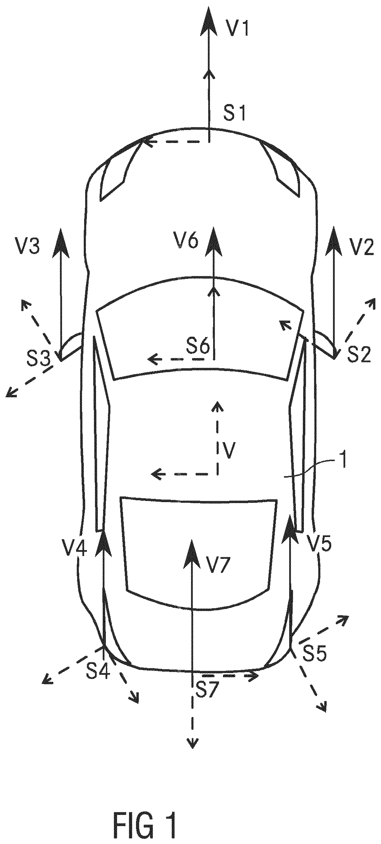

Figur 1 zeigt ein Fahrzeug 1, das mit sieben nicht näher dargestellten Sensoren versehen ist. Jeder Sensor ist dafür eingerichtet, jeweils eine Relativgeschwindigkeit V1 bis V7 bezogen auf jeweils ein Sensorkoordinatensystem S1 bis S7 nach Betrag und Richtung zu messen.

Derartige Sensoren können beispielsweise als LIDAR oder RADAR Sensor oder als Timeof-Flight (ToF) Kamera ausgebildet sein. Eine Relativgeschwindigkeit V1 bis V7 kann auch dadurch ermittelt werden, dass die Entfernung eines fahrzeugunabhängig feststehenden Objektes zum jeweiligen Sensorkoordinatensystem S1 bis S7 mittels einer Kamera zu aufeinanderfolgenden Messzeitpunkten erfasst und aus der Relativbewegung des Objektes in dem Sensorkoordinatensystem S1 bis S7, bezogen auf die Differenz der Messzeitpunkte, eine Relativgeschwindigkeit V1 bis V7 berechnet wird.

Zur Vereinfachung der Darstellung sind in Figur 1 eine erste bis siebente Relativgeschwindigkeit V1 bis V7 jeweils in einem zweidimensionalen kartesischen Sensorkoordinatensystem S1 bis S7 dargestellt. Es sind aber auch Sensoren verfügbar, mit denen eine Relativgeschwindigkeit V1 bis V7 als dreidimensionale Vektorgröße erfasst werden kann. Das nachfolgend beschriebene Verfahren ist ohne Beschränkung auch für dreidimensional erfasste Relativgeschwindigkeiten ausführbar.

Die Sensoren sind über das Fahrzeug 1 miteinander starr verbunden und folgen dessen Bewegung. Die Lagebeziehung der Sensorkoordinatensysteme S1 bis S7 zueinander wie auch in Bezug auf ein Fahrzeugkoordinatensystem V kann somit mittels einer homogenen Koordinatentransformation beschrieben werden. Insbesondere sind das zweite bis fünfte Sensorkoordinatensystem S2 bis S5 sowie das siebente Sensorkoordinatensystem S7 relativ zueinander und gegenüber dem Fahrzeugkoordinatensystem V gedreht.

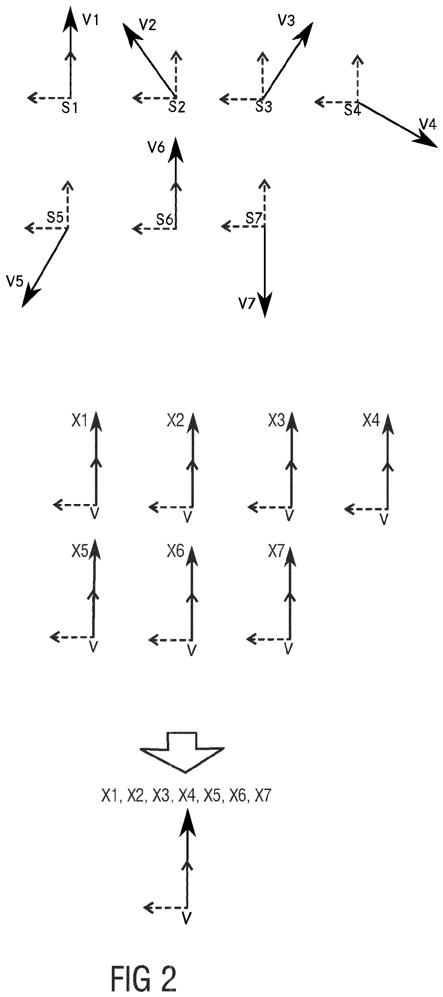

In einem als extrinsische Kalibrierung bezeichneten, aus dem Stand der Technik bekannten Verfahren wird eine homogene Koordinatentransformation für jedes der Sensorkoordinatensysteme S1 bis S7 einmalig ermittelt und nachfolgend zur Transformation einer mit dem jeweiligen Sensor erfassten Relativgeschwindigkeit V1 bis V7 in das Fahrzeugkoordinatensystem V herangezogen, wie in Figur 2 näher dargestellt wird.

Figur 2 zeigt die von je einem Sensor erfasste erste bis siebente Relativgeschwindigkeit V1 bis V7 als zweidimensionale Vektorgröße in dem jeweils zugeordneten Sensorkoordinatensystem S1 bis S7 bei einer gleichförmig geradlinigen Bewegung des Fahrzeugs 1. Aufgrund ihrer Drehung zueinander weisen im zweiten bis fünften sowie im siebenten Sensorkoordinatensystem S2 bis S5, S7 die zweite bis fünfte sowie die siebente Relativgeschwindigkeit V2 bis V5, V7 eine unterschiedliche Richtung und teilweise auch einen unterschiedlichen Betrag auf.

Durch Anwendung der sensorbezogenen homogenen Koordinatentransformation wird zu jeder Relativgeschwindigkeit V1 bis V7 jeweils eine geschätzte Objektgeschwindigkeit X1 bis X7 ermittelt, die die geschätzte Geschwindigkeit des jeweiligen Sensors nach Betrag und Richtung bezogen auf das Fahrzeugkoordinatensystem V angibt.

Sind die sensorbezogenen homogenen Koordinatentransformationen in der extrinsischen Kalibrierung korrekt ermittelt worden und sind die Sensorkoordinatensysteme S1 bis S7 in ihrer Lage zueinander und zum Fahrzeug 1 unverändert, so wird bei geradlinig gleichförmiger Bewegung des Fahrzeugs 1 durch Anwendung der sensorbezogenen homogenen Koordinatentransformation zu jeder der Relativgeschwindigkeiten V1 bis V7 eine nach Betrag und Richtung gleiche Objektgeschwindigkeit X1 bis X7 bezogen auf das Fahrzeugkoordinatensystem V ermittelt, wie in Figur 2 dargestellt.

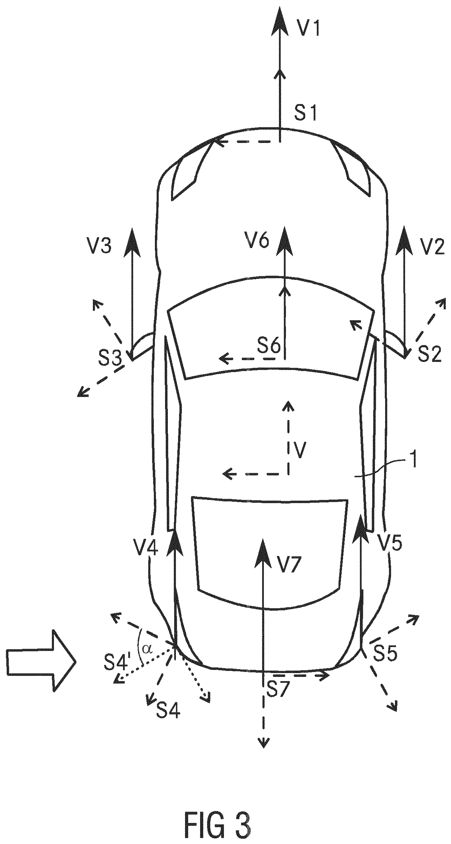

Figur 3 zeigt das Fahrzeug 1 mit seinen den nicht näher dargestellten Sensoren zugeordneten Sensorkoordinatensystemen S1 bis S7. Abweichend von Figur 1 ist das vierte Sensorkoordinatensystem S4 gegenüber dem Zustand, in dem die extrinsische Kalibrierung vorgenommen wurde, verändert.

Insbesondere ist das vierte Sensorkoordinatensystem S4 gegenüber einem ursprünglich kalibrierten vierten Sensorkoordinatensystem S4', mit welchem die extrinsische Kalibrierung vorgenommen wurde, um einen Winkelversatz *α* verdreht.

Entsprechend ist, wenn das Fahrzeug 1 in gleicher Weise bewegt wird wie durch die Relativgeschwindigkeiten V1 bis V7 gemäß der Figur 2 angegeben, auch die vierte Relativgeschwindigkeit V4 im vierten Sensorkoordinatensystem S4 verdreht, während die übrigen Relativgeschwindigkeiten V1 bis V3, V5 bis V7 nach Betrag und Richtung gegenüber der Figur 2 unverändert bleiben.

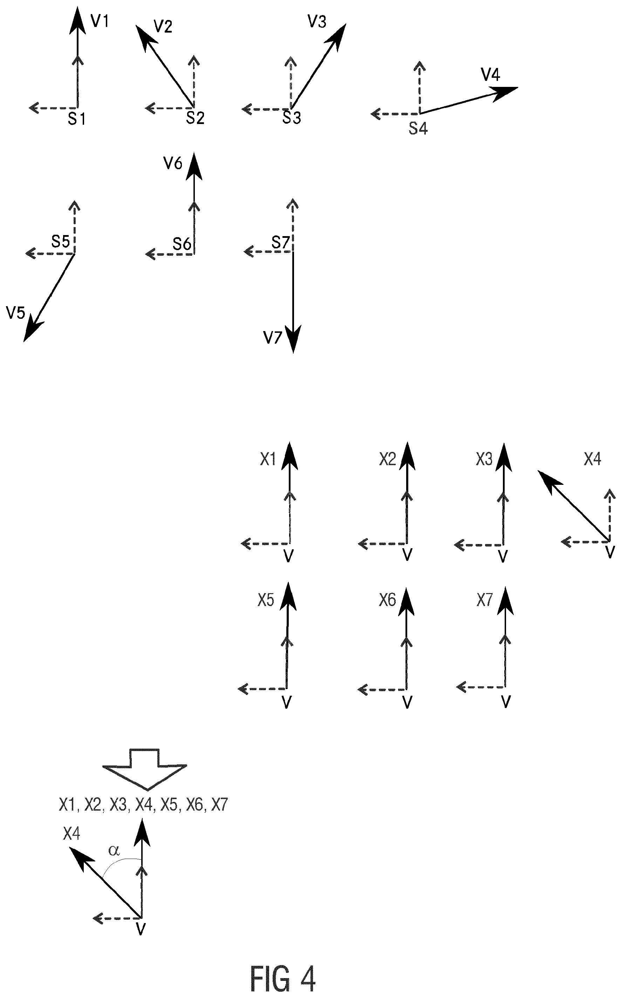

Somit bewirkt auch die Anwendung der sensorbezogenen homogenen Koordinatentransformationen für diese übrigen Relativgeschwindigkeiten V1 bis V3, V5 bis V7 jeweils zueinander und auch zur Bewegung des Fahrzeugs 1 übereinstimmende Objektgeschwindigkeiten X1 bis X3, X5 bis X7, wie in Figur 4 dargestellt.

**Der Winkelversatz** *α* des vierten Sensorkoordinatensystems S4 gegenüber der extrinsischen Kalibrierung bewirkt dagegen einen Winkelversatz *α* auch der vierten Objektgeschwindigkeit X4, die durch Anwendung der auf das ursprünglich kalibrierte vierte Sensorkoordinatensystem S4' bezogenen homogenen Koordinatentransformation ermittelt wird.

Der Erfindung liegt die Erkenntnis zugrunde, dass sich aus der Abweichung einer einzelnen - vorliegend der vierten - Objektgeschwindigkeit X4 gegenüber einer Mehrzahl von anderen, untereinander übereinstimmenden Objektgeschwindigkeiten X1 bis X3, X5 bis X7 eine Lageabweichung eines Sensorkoordinatensystems S4 gegenüber einem ursprünglichen Sensorkoordinatensystem S4' zum Zeitpunkt der extrinsischen Kalibrierung erkennen lässt.

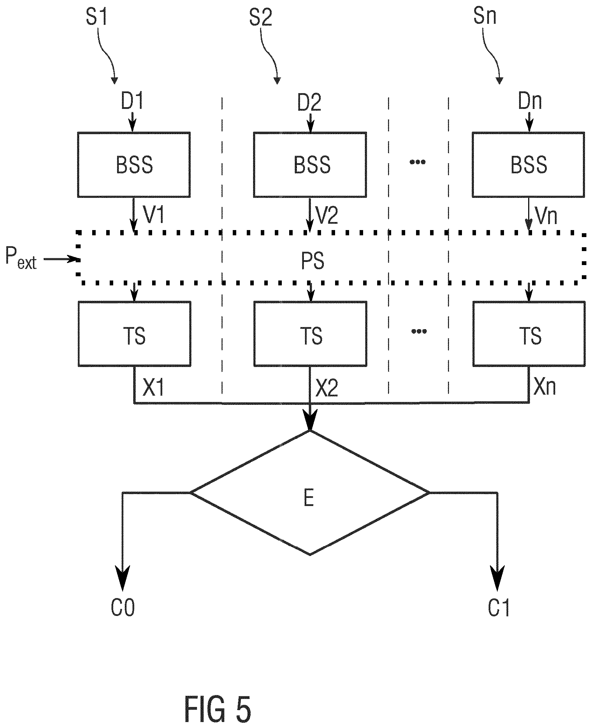

Figur 5 erklärt den Ablauf eines Verfahrens zur Erkennung einer solchen Lageabweichung genauer.

Für das erste bis n-te Sensorkoordinatensystem S1 bis Sn wird aus jeweils zugeordneten Sensordaten D1 bis Dn in einem Bewegungsschätzungsschritt BSS eine erste bis n-te Relativgeschwindigkeit V1 bis Vn geschätzt. Beispielsweise kann eine Relativgeschwindigkeit V1 bis Vn aus der Ortsbewegung eines Objektes in dem Sensorkoordinatensystem S1 bis Sn geschätzt werden.

Aus der Mehrzahl von derart geschätzten Relativgeschwindigkeiten V1 bis Vn wird in einem nachfolgenden Parametrisierungsschritt PS ein Bewegungsmodell des Fahrzeugs 1 parametrisiert.

In den Parametrisierungsschritt PS fließen zusätzlich zu den geschätzten, auf jeweils ein Sensorkoordinatensystem S1 bis Sn bezogenen Relativgeschwindigkeiten V1 bis Vn extrinsische Parameter *Pₑₓₜ* ein, welche die Lage der Sensorkoordinatensysteme S1 bis Sn bezogen auf das Fahrzeugkoordinatensystem V (und somit auch deren Lage relativ zueinander) beschreiben. Beispielhaft können die extrinsischen Parameter *Pₑₓₜ* als Parameter sämtlicher homogener Koordinatentransformationen bereitgestellt werden, die die Pose (das heißt: den Versatz und die Drehung) jeweils eines Sensorkoordinatensystems S1 bis Sn bezogen auf das Fahrzeugkoordinatensystem V beschreiben. Die extrinsischen Parameter *Pₑₓₜ* werden in einer vorab durchgeführten extrinsischen Kalibrierung nach Verfahren bestimmt, die aus dem Stand der Technik bekannt sind.

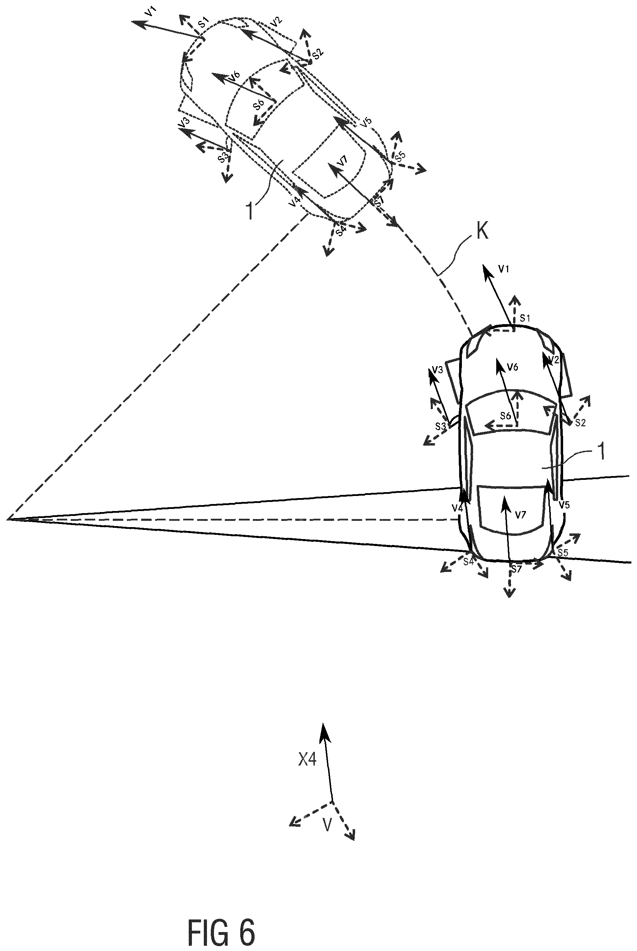

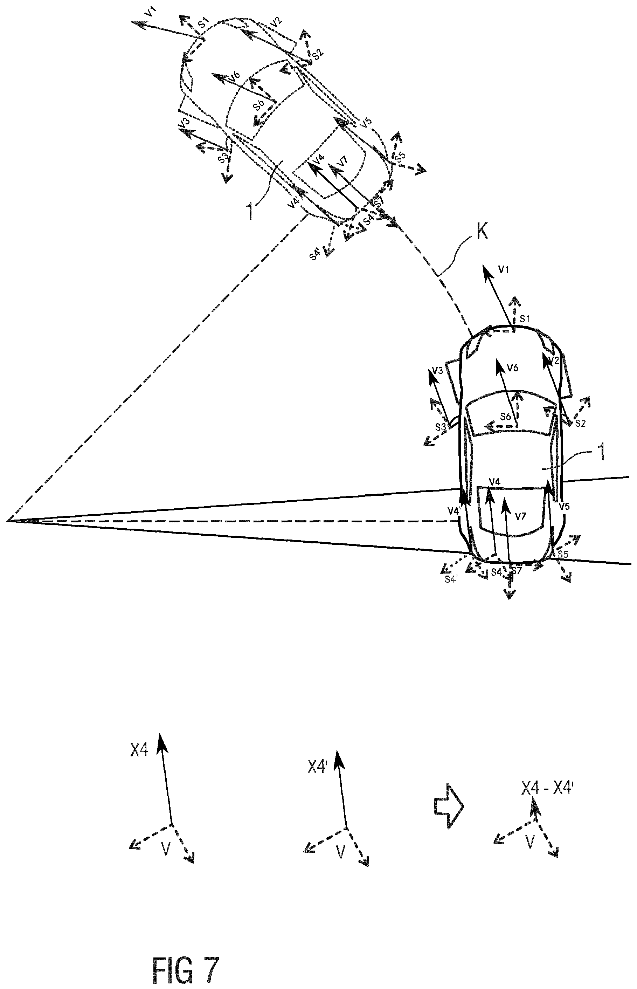

Das parametrisierte Bewegungsmodell des Fahrzeugs 1 umfasst beispielsweise bei einer Geradeausfahrt eine Geschwindigkeitskomponente entlang einer Längsrichtung des Fahrzeugs 1. Optional umfasst das parametrisierte Bewegungsmodell beispielsweise bei einer Kurvenfahrt eine weitere Geschwindigkeitskomponente entlang einer senkrecht zur Längsrichtung angeordneten Querrichtung des Fahrzeugs 1. Alternativ oder zusätzlich kann ein parametrisiertes Bewegungsmodell bei einer Kurvenfahrt auch einen Krümmungsradius einer Fahrzeugtrajektorie K umfassen, wie nachfolgend anhand der Figuren 6 und 7 noch erläutert wird. Auch weitere fahrzeugkinematische Parameter können in dem parametrisierten Bewegungsmodell erfasst sein.

In einem nachfolgenden, wieder bezogen auf jedes der Sensorkoordinatensysteme S1 bis Sn getrennt ausgeführten Transformationsschritt TS wird zu jeder der ersten bis n-ten Relativgeschwindigkeit V1 bis Vn durch Anwendung des parametrisierten Bewegungsmodells jeweils eine Objektgeschwindigkeit X1 bis Xn ermittelt. Eine Objektgeschwindigkeit X1 bis Xn gibt, nach Richtung und Betrag, eine Geschwindigkeit an, die der jeweilige Sensor bezogen auf das Fahrzeugkoordinatensystem V passend zu dem im Parametrisierungsschritt PS ermittelten Bewegungsmodell aufweist, wenn der jeweilige Sensor in seiner Pose bezogen auf das Fahrzeugkoordinatensystem V gegenüber der extrinsischen Kalibrierung unverändert ist.

In einem nachfolgenden Entscheidungsschritt E werden die Objektgeschwindigkeiten X1 bis Xn untereinander und/oder für jedes der Sensorkoordinatensysteme S1 bis Sn die jeweils ermittelte Objektgeschwindigkeit X1 bis Xn mit der jeweils bestimmten Relativgeschwindigkeit verglichen.

In einer Ausführungsform werden als Ausreißer bezeichnete, von der Mehrzahl der übrigen ermittelten Objektgeschwindigkeiten X1 bis Xn besonders auffällig abweichende Objektgeschwindigkeiten X1 bis Xn erkannt. Verfahren zur Erkennung von Ausreißern sind aus dem Stand der Technik bekannt. Beispielsweise können aus der Gesamtheit der Objektgeschwindigkeiten X1 bis Xn ein Mittelwert und eine Standardabweichung bestimmt werden. Eine Objektgeschwindigkeit X1 bis Xn kann dann als Ausreißer erkannt werden, wenn sie um eine Mehrfaches der Standardabweichung von dem Mittelwert abweicht. Wird ein oder werden mehrere solcher Ausreißer erkannt, so wird nachfolgend auf den Entscheidungsschritt E als Ergebnis ein dekalibrierter Zustand C0 zugeordnet, der anzeigt, dass Fahrzeugposen des Fahrzeugs 1, die anhand der Sensordaten D1 bis Dn ermittelt werden, nicht vertrauenswürdig sind.

Wird unter den ermittelten Objektgeschwindigkeiten X1 bis Xn kein Ausreißer erkannt, so wird nachfolgend auf den Entscheidungsschritt E als Ergebnis ein kalibrierter Zustand C1 zugeordnet, der anzeigt, dass anhand dieser Sensordaten D1 bis Dn ermittelte Fahrzeugposen weiter vertrauenswürdig sind.

Dadurch kann eine Vertrauenswürdigkeit (oder Zuverlässigkeit) der Ermittlung von Fahrzeugposen bestimmt werden, ohne dass Referenzmessungen von mehreren Sensorkoordinatensystemen S1 bis Sn in Bezug auf ein gemeinsames Referenzobjekt erforderlich sind. Insbesondere muss nicht erfasst oder sichergestellt werden, ob oder dass das gleiche Referenzobjekt von mehreren oder sogar allen Sensorkoordinatensystemen S1 bis Sn aus angemessen wird. Es ist somit nicht erforderlich, ein Referenzobjekt zu identifizieren. Insbesondere ist es auch nicht erforderlich, derartige Referenzobjekte in einer digitalen Karte zu erfassen und Messungen in den Sensorkoordinatensystemen S1 bis Sn mit einer digitalen Karte abzugleichen.

Alternativ oder zusätzlich kann der mittlere quadratische Abstand der Objektgeschwindigkeiten X1 bis Xn von einer mittleren (vektoriellen) Objektgeschwindigkeit als Maß für die Übereinstimmung der aktuellen Lagebeziehungen der Sensorkoordinatensysteme S1 bis Sn mit denen zum Zeitpunkt der extrinsischen Kalibrierung ermittelt werden.

Überschreitet der mittlere quadratische Abstand (oder ein ähnliches Abstandsmaß für die Objektgeschwindigkeiten X1 bis Xn) einen vorbestimmten Schwellwert, so wird nachfolgend auf den Entscheidungsschritt E als Ergebnis ein dekalibrierter Zustand C0 zugeordnet, der anzeigt, dass Fahrzeugposen des Fahrzeugs 1, die anhand der Sensordaten D1 bis Dn ermittelt werden, nicht vertrauenswürdig sind. Andernfalls wird nachfolgend auf den Entscheidungsschritt E als Ergebnis ein kalibrierter Zustand C1 zugeordnet, der anzeigt, dass anhand dieser Sensordaten D1 bis Dn ermittelte Fahrzeugposen weiter vertrauenswürdig sind.

Ein Vorteil dieser Ausführungsform besteht darin, dass die Dekalibration auch mehrerer Sensoren zuverlässiger bestimmt werden kann als mit Verfahren der Ausreißerdetektion.

Das Abstandsmaß kann auch als relativer Abstand bezogen auf eine mittlere Objektgeschwindigkeit bestimmt werden, beispielsweise als Variationskoeffizient der Beträge der Objektgeschwindigkeiten X1 bis Xn. Ein Vorteil dieser Ausführungsform besteht darin, dass eine robustere Erkennung eines dekalibrierten Zustands C0 möglich ist.

Die Figuren 6 und 7 verdeutlichen das Verfahren in seiner Anwendung auf ein Fahrzeug 1, das entlang einer Fahrzeugtrajektorie K bewegt wird, welche als Kreissegment ausgebildet ist.

Figur 6 zeigt das Fahrzeug 1 von Figur 1 bei einer Kurvenfahrt mit gegenüber der extrinsischen Kalibrierung unveränderten Sensorkoordinatensystemen S1 bis S7. Durch Anwendung der in der extrinsischen Kalibrierung für das vierte Sensorkoordinatensystem S4 ermittelten homogenen Koordinatentransformation auf die gemessene vierte Relativgeschwindigkeit V4 wird eine vierte Objektgeschwindigkeit X4 in Bezug auf das Fahrzeugkoordinatensystem V ermittelt.

Figur 7 zeigt ein demgegenüber verändertes Fahrzeug 1, bei welchem das vierte Sensorkoordinatensystem S4 gegenüber dem kalibrierten vierten Sensorkoordinatensystem S4' zwar gleich ausgerichtet, aber verschoben ist. Eine derartige Verschiebung bewirkt bei einer Geradeausfahrt des Fahrzeugs 1 keine Veränderung in der gemessenen vierten Relativgeschwindigkeit V4 und somit auch keine Abweichung in der vierten Objektgeschwindigkeit X4. Mit anderen Worten: eine reine Verschiebung eines Sensorkoordinatensystems S4 ist durch einen Vergleich der Objektgeschwindigkeiten X1 bis X7, die durch Anwendung der homogenen Koordinatentransformationen bestimmt werden, bei einer Geradeausfahrt nicht feststellbar.

Wird das Fahrzeug 1 dagegen, wie in Figur 7 dargestellt, auf einer kreissegmentförmigen Fahrzeugtrajektorie K bewegt, so erfährt das vierte, in Richtung der Fahrzeuglängsmittelachse und somit vom Krümmungsmittelpunkt der Fahrzeugtrajektorie K weg bewegte Sensorkoordinatensystem S4 eine höhere Radialgeschwindigkeit als sie das ursprünglich kalibrierte vierte Sensorkoordinatensystem S4' erfahren würde.

Demzufolge wird auch durch Anwendung der extrinsisch kalibrierten homogenen Koordinatentransformation eine vierte Objektgeschwindigkeit X4 ermittelt. Diese ist zwar nicht in der Richtung, aber im Betrag verändert (im vorliegenden Beispiel: vergrößert) gegenüber der vierten Objektgeschwindigkeit X4' in kalibrierter Pose.

Dieser Unterschied ist feststellbar sowohl durch Vergleich der ermittelten vierten Objektgeschwindigkeit X4 mit den übrigen Objektgeschwindigkeiten X1 bis X3, X5 bis X7 (welche im Betrag mit der vierten Objektgeschwindigkeit X4' in kalibrierter Pose übereinstimmen) oder mit mindestens einem aus der Gesamtheit aller Objektgeschwindigkeiten X1 bis X7 abgeleiteten statistischen Maß, wie anhand von Figur 5 bereits erläutert wurde.

Somit ist auch ein reiner Versatz eines Sensorkoordinatensystems S4 gegenüber der Pose, in welcher die extrinsische Kalibration vorgenommen wurde, mit dem vorgeschlagenen Verfahren erkennbar. Ein Vorteil dieses Verfahrens besteht somit darin, dass eine extrinsische Kalibration zuverlässig validiert werden kann, ohne dass es erforderlich ist, ein identisches Referenzobjekt von mehreren Sensorkoordinatensystemen S1 bis S7 aus anzumessen. Dadurch kann die Zuverlässigkeit der Bestimmung einer Fahrzeugpose mittels unabhängiger Sensoren verbessert werden.

## Patentansprüche

1. Verfahren zur Validierung einer Mehrzahl von starr mit einem Fahrzeug (1) verbundenen Umgebungserfassungssensoren, welche zur Erfassung einer auf jeweils ein Sensorkoordinatensystem (S1 bis S7, Sn) bezogenen Relativgeschwindigkeit (V1 bis V7, Vn) mindestens eines Objektes in der Umgebung des Fahrzeugs (1) eingerichtet sind,
wobei
- in einer extrinsischen Kalibrierung für jedes Sensorkoordinatensystem (S1 bis S7, Sn) eine homogene Koordinatentransformation zur Überführung von Koordinaten des Sensorkoordinatensystems (S1 bis S7, Sn) in Koordinaten eines starr mit dem Fahrzeug (1) verbundenen Fahrzeugkoordinatensystems (V) bestimmt wird,
- anhand der homogenen Koordinatentransformationen
∘ zu jeder Relativgeschwindigkeit (V1 bis V7, Vn) eine auf das Fahrzeugkoordinatensystem (V) bezogene Objektgeschwindigkeit (X1 bis X7, Xn) bestimmt wird und
∘ aus der Mehrzahl der Relativgeschwindigkeiten (V1 bis V7, Vn) mindestens ein Parameter eines Bewegungsmodells des Fahrzeugs (1) bestimmt wird und
- der Mehrzahl von Umgebungserfassungssensoren ein dekalibrierter Zustand (C0) dann zugeordnet wird, wenn die Objektgeschwindigkeiten (X1 bis X7, Xn) untereinander und/oder bezogen auf das Bewegungsmodell des Fahrzeugs (1) um mehr als ein vorbestimmtes Maß abweichen,
**dadurch gekennzeichnet, dass**
Abweichungen der Objektgeschwindigkeiten (X1 bis X7, Xn) als paarweise Vektordifferenz bestimmt werden und die nach Betrag und Richtung maximale paarweise Vektordifferenz mit einer vorbestimmten Betragsdifferenz beziehungsweise einer vorbestimmten Winkeldifferenz verglichen wird.

2. Verfahren nach Anspruch 1,
wobei
- als Bewegungsmodell des Fahrzeugs (1) eine auf das Fahrzeugkoordinatensystem (V) bezogene Fahrzeuggeschwindigkeit nach Betrag und Richtung bestimmt wird,
- aus der Fahrzeuggeschwindigkeit entsprechend der jeweils zugeordneten homogenen Koordinatentransformation für jedes Sensorkoordinatensystem (S1 bis S7, Sn) eine Soll-Relativgeschwindigkeit ermittelt wird und
- mindestens eine Soll-Relativgeschwindigkeit mit der für das jeweilige Sensorkoordinatensystem (S1 bis S7, Sn) erfassten Relativgeschwindigkeit (V1 bis V7, Vn) nach Betrag und/oder Richtung verglichen wird.

3. Verfahren nach einem der vorhergehenden Ansprüche,
wobei
eine Vertrauenswürdigkeit der Zuordnung des dekalibrierten Zustands (C0) und/oder eine Vertrauenswürdigkeit der Zuordnung eines komplementären kalibrierten Zustands (C1) statistisch aus der Mehrzahl der Relativgeschwindigkeiten (V1 bis V7, Vn) ermittelt wird.

4. Fahrzeug (1) umfassend mindestens eine Recheneinheit und eine Mehrzahl von Umgebungserfassungssensoren, welche zur Erfassung einer auf ein Sensorkoordinatensystem (S1 bis S7, Sn) des jeweiligen Umgebungserfassungssensor bezogenen Relativgeschwindigkeit (V1 bis V7, Vn) mindestens eines in der Umgebung des Fahrzeugs (1) erfassten Objektes eingerichtet sind,
**dadurch gekennzeichnet, dass**
die Umgebungserfassungssensoren und das mindestens eine Steuergerät zur Ausführung des Verfahrens nach einem der vorhergehenden Ansprüche eingerichtet sind.

5. Fahrzeug (1) nach Anspruch 4,
wobei
die mindestens eine Recheneinheit als Steuergerät ausgebildet ist.

## Claims

1. A method of validating a plurality of environment detection sensors rigidly connected to a vehicle (1) and arranged for detection of a relative velocity (V1 to V7, Vn) of at least one object in the vicinity of the vehicle (1) in terms of a respective sensor coordinate system (S1 to S7, Sn),
wherein
- in an extrinsic calibration, a homogenous coordinate transformation for converting coordinates of the sensor coordinate system (S1 to S7, Sn) to coordinates of a vehicle coordinate system (V) rigidly connected to the vehicle (1) is determined for each sensor coordinate system (S1 to S7, Sn),
- based on the homogenous coordinate transformation,
- an object velocity (X1 to X7, Xn) in terms of the vehicle coordinate system (V) is determined for each relative velocity (V1 to V7, Vn), and
- at least one parameter of a movement model of the vehicle (1) is determined from the plurality of relative velocities (V1 to V7, Vn), and
- a decalibrated state (C0) is assigned to the plurality of environment detection sensors when the object velocities (X1 to X7, Xn) deviate from each other and/or relative to the movement model of the vehicle (1) by more than a predetermined measure,
**characterised in that**
deviations of the object velocities (X1 to X7, Xn) are determined as pairwise vector differences, and the maximum pairwise vector difference by magnitude and direction is compared to a predetermined magnitude difference and a predetermined angle difference, respectively.

2. The method according to claim 1,
wherein
- a vehicle velocity in terms of the vehicle coordinate system (V) is determined by magnitude and direction as the movement model of the vehicle (1),
- a target relative velocity is calculated from the vehicle velocity according to the respectively assigned homogenous coordinate transformation for each sensor coordinate system (S1 to S7, Sn), and
- at least one target relative velocity is compared by magnitude and/or direction to the relative velocity (V1 to V7, Vn) detected for the respective sensor coordinate system (S1 to S7, Sn).

3. The method according to any of the preceding claims,
wherein
a reliability of the assignment of the decalibrated state (C0) and/or a reliability of the assignment of a complementary calibrated state (C1) is statistically calculated from the plurality of relative velocities (V1 to V7, Vn).

4. A vehicle (1), comprising at least one computing unit and a plurality of environment detection sensors arranged for detection of a relative velocity (V1 to V7, Vn) of at least one object detected in the vicinity of the vehicle (1) in terms of a sensor coordinate system (S1 to S7, Sn) of the respective environment detection sensor,
**characterised in that**
the environment detection sensors and the at least one control unit are arranged for performing the method according to one of the preceding claims.

5. The vehicle (1) according to claim 4,
wherein
the at least one computing unit is configured as a control unit.

## Revendications

1. Procédé de validation d'une pluralité de capteurs de détection d'environnement reliés de manière rigide à un véhicule (1), qui sont conçus pour détecter une vitesse relative (V1 à V7, Vn) d'au moins un objet dans l'environnement du véhicule (1) par rapport à respectivement un système de coordonnées de capteur (S1 à S7, Sn),
dans lequel
- dans un étalonnage extrinsèque pour chaque système de coordonnées de capteur (S1 à S7, Sn), une transformation homogène des coordonnées est déterminée afin de convertir les coordonnées du système de coordonnées de capteur (S1 à S7, Sn) en coordonnées d'un système de coordonnées de véhicule (V) relié de manière rigide au véhicule (1),
- à l'aide des transformations homogènes des coordonnées
∘ pour chaque vitesse relative (V1 à V7, Vn), une vitesse d'objet (X1 à X7, Xn) est déterminée par rapport au système de coordonnées de véhicule (V) et
∘ au moins un paramètre d'un modèle de mouvement du véhicule (1) est déterminé à partir de la pluralité des vitesses relatives (V1 à V7, Vn)
et
- un état étalonné (CO) est alors attribué à la pluralité des capteurs de détection d'environnement lorsque les vitesses des objets (X1 à X7, Xn) divergent entre elles et/ou par rapport au modèle de mouvement du véhicule (1) de plus d'une valeur prédéterminée,
**caractérisé en ce que**
les écarts entre les vitesses des objets (X1 à X7, Xn) sont déterminés sous forme de différences vectorielles par paires et la différence vectorielle maximale par paires en termes de valeur et de direction est comparée à une différence de valeur prédéterminée ou à une différence angulaire prédéterminée.

2. Procédé selon la revendication 1,
dans lequel
- en tant que modèle de mouvement du véhicule (1), une vitesse du véhicule est déterminée en fonction de la valeur et de la direction par rapport au système de coordonnées du véhicule (V),
- - une vitesse relative de consigne est déterminée à partir de la vitesse du véhicule conformément à la transformation homogène des coordonnées attribuée à chaque système de coordonnées de capteur (S1 à S7, Sn) et
- au moins une vitesse relative de consigne est comparée à la vitesse relative (V1 à V7, Vn) enregistrée pour le système de coordonnées de capteur correspondant (S1 à S7, Sn) en termes de valeur et/ou de direction.

3. Procédé selon l'une quelconque des revendications précédentes,
dans lequel
une fiabilité de l'attribution de l'état étalonné (CO) et/ou une fiabilité de l'attribution d'un état étalonné complémentaire (C1) est déterminée statistiquement à partir de la pluralité des vitesses relatives (V1 à V7, Vn).

4. Véhicule (1) comprenant au moins une unité informatique et une pluralité de capteurs de détection d'environnement, qui sont conçus pour détecter une vitesse relative (V1 à V7, Vn) d'au moins un objet détecté dans l'environnement du véhicule (1) par rapport à un système de coordonnées de capteur (S1 à S7, Sn) du capteur de détection d'environnement correspondant,
**caractérisé en ce que**
les capteurs de détection d'environnement et au moins un organe de commande sont configurés pour mettre en œuvre le procédé selon l'une quelconque des revendications précédentes.

5. Véhicule (1) selon la revendication 4,
dans lequel
l'au moins une unité informatique est conçue sous la forme d'organe de commande.
